## Europäisches Patentamt
## European Patent Office
## Office européen des brevets

(19)

(11) Numéro de publication: **0 121 214**
**B1**

(12) # FASCICULE DE BREVET EUROPEEN

(45) Date de publication du fascicule du brevet:
**16.09.87**

(51) Int. Cl.⁴: **H 02 P 7/62,** B 60 L 9/22

(21) Numéro de dépôt: **84103338.4**

(22) Date de dépôt: **27.03.84**

(54) **Dispositif de commutation statique traction-freinage pour système à vitesse variable à moteurs asynchrones alimentés par commutateur de courant.**

(30) Priorité: **30.03.83 FR 8305228**

(43) Date de publication de la demande:
**10.10.84 Bulletin 84/41**

(45) Mention de la délivrance du brevet:
**16.09.87 Bulletin 87/38**

(84) Etats contractants désignés:
**BE CH DE FR GB IT LI NL SE**

(56) Documents cités:
**EP - A - 0 053 414**
**FR - A - 2 161 162**
**FR - A - 2 214 996**

**ELEKTRISCHE BAHNEN, vol. 79, no. 5, mai 1981, pages 202-210, Munich, DE, J. AMLER: "Energiesparwagen für die Nürnberger U-Bahn - die ersten serienmässig hergestellten Drehstromtriebwagen**

(73) Titulaire: **ALSTHOM, 38, avenue Kléber, F-75784 Paris Cédex 16 (FR)**

(72) Inventeur: **Guilloux, Bernard, 19 rue du Bourbonnais, F-69330 Meyzieu (FR)**

(74) Mandataire: **Weinmiller, Jürgen et al, Lennéstrasse 9 Postfach 24, D-8133 Feldafing (DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet un dispositif de commutation rapide entre deux modes de fonctionnement, en traction ou en freinage respectivement, pour système à vitesse variable à moteurs asynchrones alimentés par commutateur de courant.

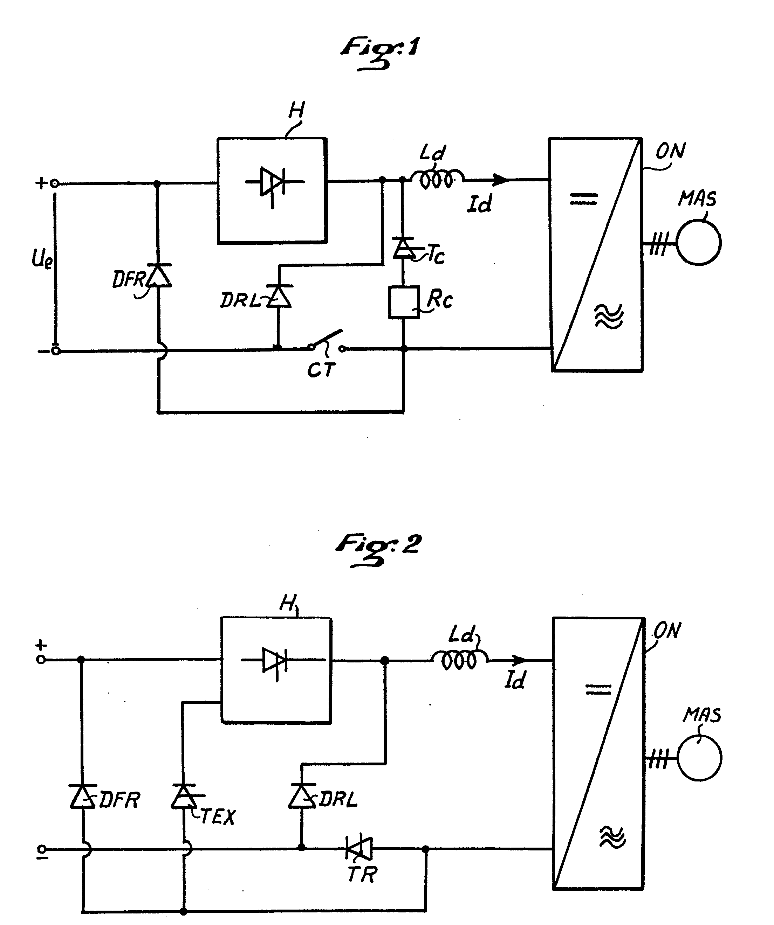

Dans le cas particulier, par exemple, d'une motrice alimentée en courant continu, le système à vitesse variable comporte (Figure 1) un hacheur H constituant une source de courant intermédiaire Id continu, alimentant un ou plusieurs moteurs asynchrones MAS par l'intermédiaire d'un commutateur de courant ou onduleur ON.

La commutation du fonctionnement en traction au fonctionnement en freinage, et vice versa, est assurée par l'ensemble constitué essentiellement et de manière connue par des diodes DRL, DFR et le contacteur CT. Ce contacteur est fermé en traction et ouvert en freinage.

Il est connu que le temps de réponse d'un contacteur est relativement long, de l'ordre du dixième de seconde. Or la rapidité de commutation est particulièrement intéressante dans le cas de systèmes à vitesse variable à moteurs asynchrones alimentés par commutateur de courant.

D'une part, cette rapidité permet d'avoir une bonne synchronisation entre l'instant où se produit la commutation et la commande de l'onduleur. D'autre part, dans un tel système, lors du passage du fonctionnement en traction au fonctionnement en freinage, il faut éviter que le courant intermédiaire Id, fourni par la source de courant au commutateur de courant pendant la phase traction, ne s'annule afin de remplir les deux conditions essentielles de fonctionnement suivantes:

– maintenir un flux suffisant dans les moteurs asynchrones pour assurer l'établissement du freinage,

– assurer un fonctionnement correct du commutateur de courant dont le pouvoir de coupure est lié à la valeur du courant intermédiaire Id.

Pour pallier le manque de rapidité de l'imprécision du temps d'ouverture du contacteur CT (Figure 1), il est nécessaire d'ajouter un circuit auxiliaire composé d'un thyristor Tc et d'une résistance Rc. Ce circuit auxiliaire est branché entre les deux conducteurs parcourus par le courant continu intermédiaire Id, et entre le commutateur de courant ON et le contacteur CT. Il est mis en service lors de chaque commutation traction-freinage et viceversa, afin de maintenir le courant intermédiaire Id.

Il est également connu par le brevet européen EP-A-53 414 de remplacer le contacteur de commutation traction-freinage par un thyristor de commutation équipé de son propre circuit d'extinction forcée.

La présente invention a pour but, comme cette dernière solution, de remplacer le contacteur de commutation traction-freinage par un système statique de commutation rapide mais d'un genre plus simple ne nécessitant pas de circuit autonome d'extinction forcée, mais utilisant le circuit d'extinction forcée du hacheur.

La présente invention a pour objet un dispositif de commutation statique traction-freinage, pour système à vitesse variable à moteurs asynchrones alimentés par commutateur de courant, du type utilisant une source de courant continu intermédiaire avec sur un premier conducteur un hacheur statique et sur un deuxième conducteur un thyristor de commutation traction-freinage, le hacheur statique comportant un thyristor principal avec une diode antiparallèle et un circuit d'extinction forcée composé d'un thyristor d'extinction avec diode antiparallèle et d'un circuit oscillant à self et capacité, deux diodes reliant l'une la borne amont (sens du courant dans le conducteur) du thyristor de commutation traction-freinage à la borne amont du hacheur et l'autre la borne aval du thyristor de commutation traction-freinage à un point aval du hacheur de manière à permettre l'inversion du sens du courant entre la traction et le freinage. Ce dispositif de commutation statique traction-freinage est remarquable en ce qu'un thyristor de contrôle est placé en amont du hacheur, une self intercalée en série au point aval du hacheur avec la diode reliant ce dernier à la borne aval du thyristor de commutation traction-freinage, et un thyristor auxiliaire d'extinction intercalé entre d'une part la borne amont du thyristor de commutation traction-freinage et d'autre part le point de connexion du thyristor de contôle et du thyristor principal afin d'appliquer, quand le hacheur cesse de conduire, la tension de la capacité du circuit de commutation forcée du thyristor principal aux bornes du thyristor de commutation statique de traction-freinage pour assurer l'extinction de ce dernier.

Selon d'autres caractéristiques de l'invention, un circuit série composé d'un thyristor et d'une self est placé en parallèle sur la diode et la self reliant la borne aval du thyristor de commutation traction-freinage au point aval du hacheur, cette dernière self pouvant être placée au moins partiellement en série avec le thyristor de commutation traction-freinage sur le conducteur d'alimentation.

A titre d'exemple et pour faciliter la description, on a représenté au dessin annexé:

Figure 1 – un schéma symbolique simplifié d'un dispositif de commutation traction-freinage à contacteur de type connu.

Figure 2 – un schéma électrique d'un dispositif de commutation traction-freinage selon l'invention, à thyristor de commutation statique.

Figure 3 – un schéma électrique plus détaillé des éléments essentiels d'un dispositif de commutation selon l'invention.

Figure 4 – une représentation de différents signaux de tension et de courant en différents points du circuit de la figure 3.

Figure 5 – un schéma électrique d'une variante de réalisation d'un dispositif de commutation selon l'invention correspondant à la figure 3, mais avec un thyristor et une inductance supplémentaires.

Figure 6 – un schéma électrique d'une variante de réalisation d'un dispositif de commutation selon la figure 5, dans lequel l'inductance supplémentaire est dédoublée.

Figure 7 – une représentation de différents signaux de tension et de courant en différents points du circuit de la figure 5.

En se reportant au dessin on voit que le réseau continu définit une tension d'entrée Ue (Fig. 1). Le circuit comprend le hacheur principal H qui délivre le courant continu intermédiaire Id, lissé par l'inductance Ld, au commutateur de courant ou onduleur ON, lequel alimente un ou plusieurs moteurs asynchrones MAS. Le contacteur CT, sur le conducteur négatif a ses deux bornes reliée au conducteur positif, respectivement en aval du hacheur pour sa borne aval (sens du courant dans le conducteur) et en amont du hacheur pour sa borne amont, respectivement par les diodes DRL et DFR. En outre, sa borne amont est reliée au conducteur positif en aval du hacheur par l'intermédiaire de la résistance Rc en série avec le thyristor Tc.

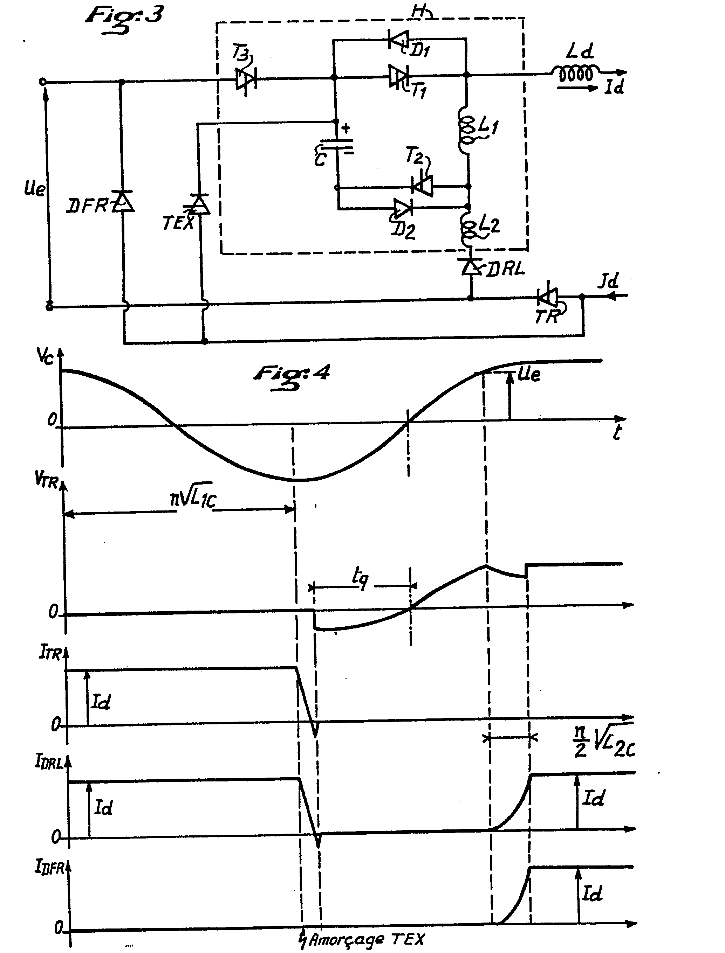

Sur la figure 2, les diodes DRL et DFR ont conservé leurs positions respectives et leur rôle, consistant à assurer, pendant les périodes de freinage (contacteur CT ouvert) la restitution du courant au réseau. Le contacteur CT a été remplacé par un thyristor TR, et il est prévu un thyristor d'extinction TEX dont le rôle est de réaliser le branchement du circuit d'extinction du hacheur principal H au thyristor TR afin de commander l'extinction de celui-ci lors de la commutation du fonctionnement en traction au fonctionnement en freinage. On évite ainsi l'emploi d'un circuit d'extinction spécialement prévu pour le thyristor TR.

La figure 3 est un exemple plus détaillé de réalisation du dispositif. Sur cette figure, le circuit du hacheur H est représenté, avec un thyristor de contrôle T3 en série avec un thyristor principal T1, muni d'une diode antiparallèle D1, le thyristor T2 avec sa diode D2 antiparallèle, les deux inductances L1 et L2 en série avec la diode DRL entre les deux conducteurs, et le condensateur C dans le circuit oscillant d'extinction du hacheur H. Le thyristor TEX est branché entre l'anode du thyristor TR et le point commun à l'anode du thyristor T1 et à la cathode du thyristor T3.

Le fonctionnement du dispositif lors d'une commutation traction-freinage est le suivant:

Le hacheur H étant bloqué, le courant Id passe par les éléments TR, DRL, L2, L1, Ld, et se referme à travers l'onduleur ON et deux phases du moteur MAS.

Le thyristor T3 étant maintenu bloqué, les thyristors T1 et T2 sont amorcés. La tension aux bornes du condensateur C qui a les polarités (±) indiquées (la polarité + étant du côté de l'anode de T1) va changer de sens après une demi-oscillation de forme sinusoïdale. Les diodes D1 et D2 se mettent à conduire et les thyristors T1 et T2 se bloquent. A ce même instant, il faut amorcer le thyristor TEX, ce qui a pour effet de générer un courant d'allure sinusoïdale dans le circuit comprenant L2, DRL, TR, TEX, C et D2, et de sens opposé à celui de la conduction normale dans les éléments DRL et TR. Le courant dans ces deux éléments s'annule donc rapidement tandis que le courant intermédiaire Id passe, à travers les éléments TEX, C, D2, L1 et Ld.

Pendant ce temps, et dès que les diodes D1 et D2 sont entrées en conduction, le courant dans le condensateur C a changé de sens puisqu'il est traversé par le courant sinusoïdal de la boucle C, D2, L1, D1 d'une part, et par le courant d'abord sinusoïdal de la boucle C, D2, L2, DRL, TR, TEX, puis par le courant intermédiaire Id après blocage de DRL et TR d'autre part.

La tension apparaît à nouveau avec les polarités initiales (±) sur le condensateur C, et, lorsque la valeur de la tension du condensateur atteint la valeur Ue de la source d'alimentation, la diode DFR devient conductrice et conduit finalement la totalité du courant Id pendant que, parallèlement le courant traversant TEX décroît jusqu'à 0. Finalement tout le courant Id circule par DFR, le réseau continu, DRL, L2, L1, Ld et l'onduleur avec le moteur.

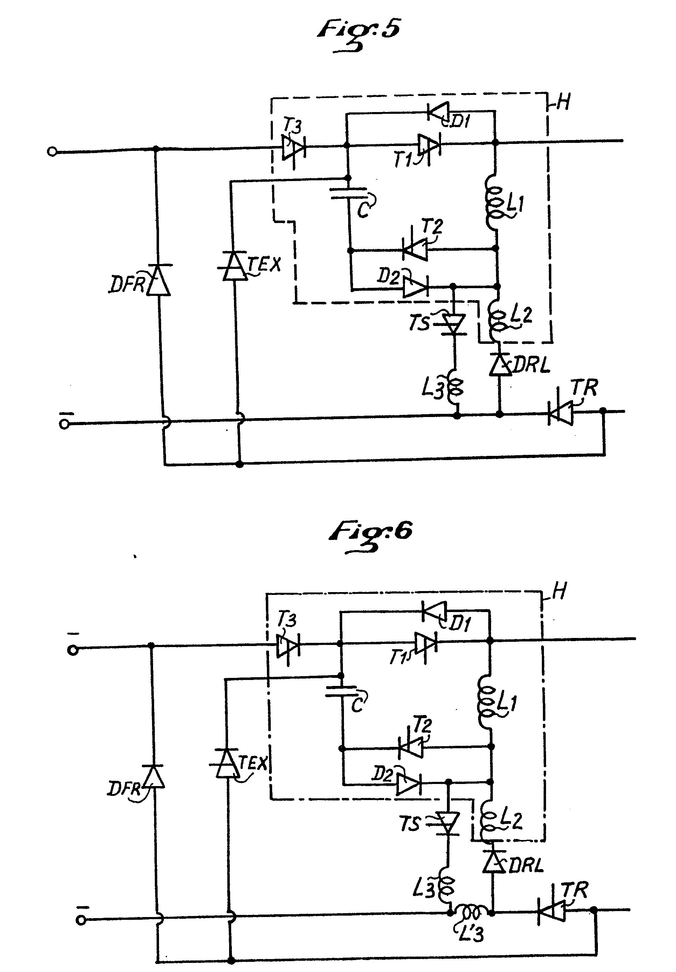

La figure 4 représente les principales grandeurs électriques du schéma de la figure 3.

Dans la description précédente, le thyristor TEX est amorcé à l'instant précis où la tension sur le condensateur C atteint la valeur maximale inverse, mais il est plus avantageux d'amorcer le thyristor TEX avant cet instant ce qui augmente le temps de repos du thyristor TR, cette «anticipation» de l'amorçage du thyristor TEX permettant de bénéficier pour l'extinction du thyristor TR, d'une partie de l'énergie réactive de l'inductance L1 acquise pendant la phase initiale d'inversion.

Ainsi qu'on peut le constater sur la figure 4, la durée de la commutation du fonctionnement en traction, au fonctionnement en freinage est brève, car elle est sensiblement égale à une période $T = 2\pi\sqrt{L1\,C}$ du circuit de commutation, auquel il faut éventuellement ajouter le temps nécessaire à l'extinction du hacheur pour se retrouver dans l'état initial de la description qui supposait le hacheur bloqué. Ce temps total ne doit pas dépasser la milliseconde.

La rapidité de cette commutation des circuits permet donc de fonctionner sans retard dans la configuration freinage, ce qui permet un contrôle parfait de l'ensemble du système ainsi qu'il a été dit précédemment.

La figure 5 donne un autre exemple de réalisation, adapté, en particulier, au cas où la valeur des charges stockées du thyristor TR, moins rapide, et de la diode DRL, plus rapide, sont trop différentes.

Une branche constituée d'un thyristor supplémentaire (TS) et d'une inductance L3 est placée en parallèle aux bornes de la branche constituée de l'inductance L2 et de la diode DRL. Les éléments TS et L3 étant en série, leurs emplacements dans la branche dont il est question ci-dessus peuvent évidemment être intervertis.

La figure 6 représente une variante de réalisation dans laquelle, en série avec le thyristor TR sur le conducteur négatif, entre L3 et la diode DRL, a été ajoutée une inductance L3 qui peut être utilisée avec ou sans L3.

Le fonctionnement avec ce thyristor TS n'est pas fondamentalement différent de celui déjà décrit. Le seul point à respecter est l'amorçage simultané des thyristors TS et TEX.

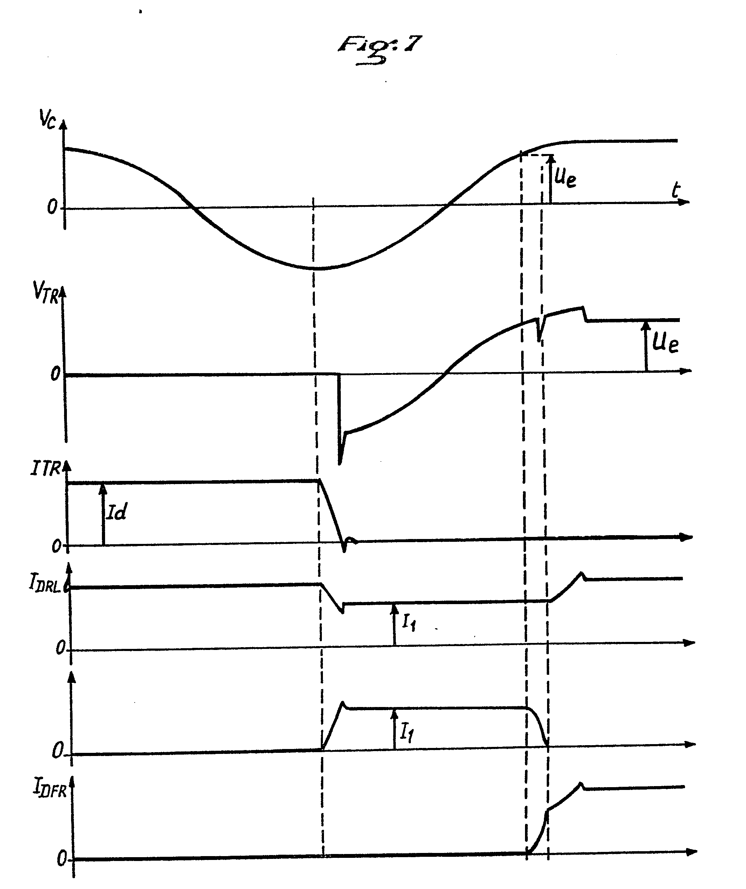

L'évolution des tensions et des courants est similaire à celle du montage de la figure 3, à l'exception du courant dans la diode DRL et l'inductance L2, qui ne s'annule pas totalement après l'amorçage des thyristors TEX et TS, un courant I1 de valeur inférieure à Id continuant à circuler dans la boucle constituée des éléments DRL, L2, TS, L3 et/où L'3 (Figure 7).

Lorsque la tension du condensateur de commutation redevient positive et atteint la valeur Ue de la source d'alimentation, le courant intermédiaire Id qui passait par TEX va progressivement s'établir dans DFR jusqu'à la totalité. Parallèlement, le courant qui circule dans DRL va remonter de la valeur I1 à la valeur Id tandis que le courant dans TS va diminuer de la valeur I1 à 0 (Figure 7).

Lors de la commutation inverse, du fonctionnement en freinage au fonctionnement en traction, le remplacement du contacteur CT par le thyristor TR, est également très avantageux sur le plan de la rapidité. L'amorçage de ce thyristor, en coïncidence avec les thyristors T1 et T3 du hacheur, a pour effet immédiat de bloquer la diode DFR, et par conséquence de remettre le circuit instantanément dans la configuration de traction, l'avantage résultant de la possibilité donnée par le dispositif de bloquer le thyristor TR dans la commutation initiale du fonctionnement en traction au fonctionnement en freinage.

## Revendications

1. Dispositif de commutation statique traction-freinage pour système à vitesse variable à moteurs asynchrones alimentés par commutateur de courant (ON) du type utilisant une source de courant continu intermédiaire comprenant sur un premier conducteur un hacheur (H) qui comporte un thyristor principal ($T_1$) avec diode antiparallèle ($D_1$), un circuit d'extinction placé en parallèle sur le thyristor principal ($T_1$) et composé d'un thyristor ($T_2$) d'extinction avec diode antiparallèle ($D_2$), d'une capacité (C) et d'une self ($L_1$), le dispositif de commutation sur le second conducteur de la source de courant continu comprenant un thyristor de commutation ($T_R$), dont la borne amont (sens du courant dans le conducteur) est connectée par l'intermédiaire d'une première diode (DFR) à la borne amont du hacheur (H) et dont la borne aval est connectée par l'intermédiaire d'une seconde diode (DRL) à un point aval du hacheur (H), caractérisé en ce qu'un thyristor de contrôle ($T_3$) placé en amont du hacheur (H) est connecté en série avec celui-ci, qu'une self ($L_2$) en série avec la diode (DRL) relie la borne aval du thyristor de commutation ($T_R$) au point aval du hacheur (H) et qu'un autre thyristor (T) d'extinction est connecté entre d'une part le point de connection de ce thyristor de contrôle ($T_3$) et du thyristor principal ($T_1$) et d'autre part la borne amont du thyristor ($T_R$) de commutation afin d'appliquer, quand le hacheur (H) a cessé de conduire, la tension de la capacité (C) aux bornes du thyristor de commutation ($T_R$) pour assurer l'extinction de ce dernier.

2. Dispositif selon la revendication 1, caractérisé en ce qu'un circuit série composé d'un thyristor ($T_S$) et d'une self ($L_3$) est placé en parallèle sur le circuit composé de la diode (DRL) et de la self ($L_2$).

3. Dispositif selon la revendication 2, caractérisé en ce que ladite inductance ($L_3$) en série avec ledit thyristor ($T_S$) est au moins partiellement placée en série avec ledit thyristor de commutation ($T_R$) sur le conducteur d'alimentation.


## Patentansprüche

1. Statische Schaltvorrichtung für den Fahr- und Bremsbetrieb mit variabler Geschwindigkeit eines Systems von durch Stromkommutator (ON) gespeisten asynchronen Motoren, von der Art, die eine Zwischengleichstromquelle verwendet, mit einem Zerhacker (H) in einem ersten Leiter, der einen Hauptthyristor ($T_1$) mit einer antiparallelen Diode ($D_1$) enthält, einem parallel zum Hauptthyristor ($T_1$) liegenden und aus einem Löschthyristor ($T_2$) mit einer antiparallelen Diode ($D_2$), aus einem Kondensator (C) und einer Induktivität ($L_1$) zusammengesetzten Löschkreis, wobei die Schaltvorrichtung in einem zweiten Leiter der Gleichstromquelle einen Schaltthyristor ($T_R$) aufweist, dessen quellenseitiger Anschluss (Stromrichtung im Leiter) über eine erste Diode (DFR) an den quellenseitigen Anschluss des Zerhackers (H) angeschlossen ist und dessen anderer Anschluss über eine zweite Diode (DRL) an einen stromabwärts gelegenen Punkt des Zerhackers (H) angeschlossen ist, dadurch gekennzeichnet, dass ein Steuerthyristor ($T_3$), der vor dem Zerhakker (H) liegt, in Reihe mit diesem angeschlossen ist, dass eine Induktivität ($L_2$) in Reihe mit der Diode (DRL) den stromabwärts liegenden Anschluss des Schaltthyristors ($T_R$) mit dem stromabwärts liegenden Anschluss des Zerhackers (H) verbindet, und dass ein weiterer Thyristor, ein Löschthyristor ($T_{EX}$), einerseits zwischen dem Verbindungspunkt dieses Steuerthyristors ($T_3$) und des Hauptthyristors ($T_1$) und andererseits vor dem Schaltthyristor ($T_R$) eingefügt ist, um die Spannung des Kondensators (C) an die Anschlüsse des Schaltthyristors ($T_R$) anzulegen, um dessen Löschung zu bewirken, wenn der Zerhakker (H) zu leiten aufgehört hat.

2. Vorrichtung nach Anspruch 1, dadurch gekennzeichnet, dass ein Serienschaltkreis, bestehend aus einem Thyristor ($T_S$) und einer Induktivität ($L_3$) parallel zu dem aus der Diode (DRL) und der Induktivität ($L_2$) gebildeten Kreis angeordnet ist.

3. Vorrichtung nach Anspruch 2, dadurch gekennzeichnet, dass die mit dem Thyristor ($T_S$) in Reihe liegende Induktivität ($L_3$) mindestens teilweise in Reihe mit dem Schaltthyristor ($T_R$) im zweiten Speiseleiter liegt.

## Claims

1. A static driving/braking switch-over device for a variable speed system including asynchroneous motors powered by current commutator (ON) of the type using an intermediate DC source and comprising a chopper (H) on a first conductor, this chopper including a main thyristor ($T_1$) with an antiparallel diode ($D_1$), an extinction circuit branched in parallel to the main thyristor ($T_1$) and composed of an extinction thyristor ($T_2$) with an antiparallel diode ($D_2$), of a capacitor (C) and of an inductance ($L_1$), the switch-over device comprising on the second conductor of the DC source a switching thyristor ($T_R$), the upstream terminal of which (current direction in the conductor) is connected via a first diode (DFR) to the upstream terminal of the chopper (H), whereas its downstream terminal is connected via a second diode (DRL) to a downstream point of the chopper (H), characterized in that a control thyristor ($T_3$) located upstream of the chopper (H) is connected in series with the latter, that an inductance ($L_2$) in series with the diode (DRL) connects the downstream terminal of the switching thyristor ($T_R$) to the downstream point of the chopper (H), and that a further extinction thyristor ($T_{EX}$) is connected on the one hand between the connection point of this control thyristor ($T_3$) and of the main thyristor ($T_1$) and on the other hand to the upstream terminal of the switching thyristor ($T_R$) in order to apply the voltage of the capacitor (C) to the terminals of the switching thyristor ($T_R$) for ensuring the extinction of the latter, when the chopper (H) has terminated its conduction phase.

2. A device according to claim 1, characterized in that a series circuit composed of a thyristor ($T_S$) and an inductance ($L_3$) is branched in parallel to the circuit composed of the diode (DRL) and the inductance ($L_2$).

3. A device according to claim 2, characterized in that said inductance ($L_3$) branched in series with said thyristor ($T_S$) is at least partly branched in series with said switching thyristor ($T_R$) on the power supply conductor.

*Fig:1*

*Fig:2*

2/4

**Fig. 3**

**Fig. 4**

9

Fig.5

Fig.6

4/4

Fig. 7

13